# EUROPEAN PATENT SPECIFICATION

(11) **EP 4 358 049 B1**
(45) Date of publication and mention of the grant of the patent: **18.02.2026**
(21) Application number: 22202662.7
(22) Date of filing: 20.10.2022
(51) Int. Cl.: G08B 17/10

(54) **METHOD AND SMOKE DETECTOR FOR PROVIDING A PREDICTIVE MAINTENANCE ALERT**
VERFAHREN UND RAUCHMELDER ZUR BEREITSTELLUNG EINES PRÄDIKTIVEN WARTUNGSALARMS
PROCÉDÉ ET DÉTECTEUR DE FUMÉE POUR FOURNIR UNE ALERTE DE MAINTENANCE PRÉDICTIVE

(43) Date of publication of application: 24.04.2024
(73) Proprietor: Robert Bosch GmbH, 70442 Stuttgart (DE)
(72) Inventor: Barbosa, Filipe, 3880 Ovar (PT)

(56) References cited:
- KR-B1- 101 102 752
- US-A1- 2020 233 397
- US-A1- 2021 133 607

## Description

### TECHNICAL FIELD

The present disclosure belongs to the technical field of a smoke detector for detecting the need of a predictive maintenance. This method and device are arranged to be jointly use in smoke detectors, also interchangeably referred to as fire detectors.

### BACKGROUND

Smoke detectors are widely used as one key product for the building's safety against fire phenomenon. There is a large portfolio of different kinds of smoke detectors depending on what kind of sensor are hosted. Because they are directly installed in the building sealings and can carry additional services that can extend their usage and the building safety/maintenance.

There are some patterns that can be identified by the Smoke Detector in order to improve the building safety and maintenance, e.g.: sound patterns or predictive maintenance.

Machine learning is a field of computer systems that aims to develop self-improving algorithms and statistical models. This is done with massive amounts of data, which a model analyses and extracts patterns form in order to learn and improve on a given task.

Tiny Machine Learning (TinyML) is a field of machine learning that focuses on the development and deployment of Machine learning models on low power microcontroller. This leverages Neural Networks and Big Data in format that can be handle by low power and low processing micro controllers.

The increasing demand for internet of things (IoT) devices, created the need of having edge devices making operations alone without the need of computing from the cloud infrastructure. Therefore, avoiding the communication period to make a decision. In the standard architecture, the edge device would only collect the data and send it to the cloud for processing. This would create some concerns namely: privacy, latency, storage, and energy efficiency.

These drawbacks led to the idea of performing processing activities onboard of edge devices. These devices are highly resource-constrained in terms of memory, computation, and power, leading to the development of more efficient algorithms, data structures, and computational methods.

The key challenges in deploying machine learning on microcontrollers are the low memory footprint, limited power, and limited computation. Tiny machine learning (TinyML) is the intersection of machine learning and embedded edge devices. The field is an emerging engineering discipline that has the potential to revolutionize many industries.

For normative reasons, fire detectors should be able to detect fire phenomena standalone without the need for extra computing processing from cloud or other fire system devices such as fire panels.

TinyML algorithms work in much the same way as traditional machine learning models. Normally, the models are trained as usual on a user's computer or in the cloud. Post-training is where the real tinyML work begins, in a process often referred to as deep compression. In deep compression, the 'teacher' is a trained neural network model. The teacher is tasked with transferring its 'knowledge' to a smaller network model with fewer parameters, the 'student'. This process is used to enshrine the same accuracy in a smaller network, providing a way of compressing the knowledge representation, and hence the size, of a neural network such that they can be used on more memory-constrained devices.

Similarly, pruning attempts to remove neurons that provide little utility to the output prediction. This is often associated with small neural weights, whereas larger weights are kept due to their greater importance during inference. The network is then retrained on the pruned architecture to fine-tune the output.

Following the model is then quantized post-training into a format that is compatible with the architecture of the embedded device. Encoding is an optional step that is sometimes taken to further reduce the model size by storing the data in a maximally efficient way.

Document US7034702B2 discloses an optical smoke detector for detecting particulates in an air sample. The detector includes a detection chamber defining an enclosure for the air sample. At least one opening is in fluid communication with the detection chamber whereby the air sample can be introduced and discharged from the detection chamber. A cleaning port defines a passageway to the detection chamber from a position external to the smoke detector and a resilient valve seals the cleaning port with a substantially air-tight seal. The valve member is accessible from a position external to the smoke detector. The valve member is openable, permitting passage of air through the cleaning port into the discharge chamber, by engaging the valve member with a nozzle, such as an air nozzle mounted on a canister of pressurized air.

Document KR20110007413A discloses an artificial intelligence type fire alarming sound apparatus is provided to automatically regulate the volume of the apparatus according to the volume of noises by detecting noises generated around fire alarms.

Document KR102012103529 discloses a fire image and sound sensing device to easily investigate the cause of a fire even from a long distance.

US2021/0133607 discloses systems and methods for self-learning Artificial Intelligence of Things (AloT) devices and services, specifically for monitoring and predicting service events for industrial assets based on a self-learning Al classification and analytics engine.

These facts are disclosed in order to illustrate the technical problem addressed by the present disclosure.

### GENERAL DESCRIPTION

The present disclosure discloses a smoke detector comprising a microphone and an electronic data processor according to independent claim 1. Preferably the smoke detector further comprises a memory, wherein the pretrained machine-learning model is stored in the memory of the smoke detector.

Here, will be proposed the usage of Tiny Machine Learning (also known as Deep Learning) models in Smoke Detector context in order to extend their core functionality and provide remote services through them. Using Tiny Machine Learning would make possible to the Smoke Detectors to handle some patterns that wouldn't be possible to support (in terms of processing or energy efficiency) using common programming.

There is a vast horizon of patterns that can be explored. But for sake of examples this proposal will just explore some use cases. The majority of the examples that will be present assume that the Smoke Detector is equipped with a MEMS microphone.

To build a machine learning model capable of recognizing patterns from a MEMS microphone is needed to collect or gather a dataset with enough samples to train the machine learning model to perform with high accuracy. To achieve high accuracy performance the dataset should have the right balance of the samples from good cases, bad cases, and noise.

When having the dataset available it will be needed to approach each sample using the mel-frequency cepstral coefficients (MFCC) technique to filter the audio samples from the dataset. This technique will help to isolate the audio input from each sample.

Long short-term memory networks (LSTM) are a type of recurrent neural network (RNN) that can learn and memorize long-term dependencies. Its default behaviour is recalling past information for long periods.

They are useful in time-series prediction because they remember previous inputs. This kind of network has a chain-like structure where four interacting layers communicate in a unique way. Besides timeseries predictions, they are the perfect candidate for detecting sound patterns.

The compression will be an iterative process of pruning and afterwards quantization to keep the accuracy of the machine learning model but achieve a huge reduction on the size.

After quantization, the model will be already able to be compiled for usage on a microcontroller used in edge devices such as smoke detectors. The suggested approach to handle the tiny machine learning model would be to import the model as a library because once flashed once in the edge device the model will not be able to continue learning and it would be just performing what it was trained to do.

Therefore, using the model as an external library could simplify the model update afterward (via software over the air, for example).

With this approach would be possible to generate models using just a few kilobytes of RAM and some milliseconds of processing time from the microcontroller leveraging over 85% accuracy.

Surroundings sound inputs are also important in case of fire. They could give precise insights about the presence of humans or animals in dedicated rooms of the building, helping the fire brigade to a rapid rescue. Using Tiny Machine Learning models of the human voice (like "yelling" or saying "help") is possible to identify the human presence with accuracy. For security and power efficient reasons the MEMS microphone would only activate in case of fire from the fire alarm system. Furthermore it is also possible to detect domestic animal sound patterns.

Other example of the usage of Tiny Machine Learning to create remote services is the detection of faucet leaking. In huge buildings, maintenance plays a key role in order to keep the building infrastructure running to provide desire comfort to the visitants. Detecting faucets water liking could also the possible using Tiny Machine Learning models in the smoke detectors. The smoke detectors are already there, the proposal is to extend their functionality to provide this extra service for the building operators.

The last example of the usage of the Tiny Machine Learning models is the usage of the data of the sensor onboard the smoke detector in order to infer predictive maintenance. Identifying malfunctions or loss of precision in the readings.

It is also disclosed using captured environment sound patterns to detect building machinery abnormal operation, for example malfunction in air-conditioning, electricity generator, IT servers, etc... and/or acoustic alarms or warnings coming from building machinery. Those are all acoustic periodic signals however it is possible to detect transient acoustic signals also.

It is also disclosed a smoke detector comprising a microphone and an electronic data processor arranged to: capture a microphone signal for sampling an ambient sound sample over a period of time; process the captured ambient sound sample with a pretrained machine-learning model to determine whether the captured ambient sound sample matches predetermined sound patterns of repetitive machinery noise.

In an embodiment, the electronic data processor is further arranged to determine a predictive maintenance alert if the captured ambient sound sample is determined to be at least in part comprising predetermined sound patterns of repetitive machinery noise.

In an embodiment, the electronic data processor is further arranged to determine a predictive maintenance alert if the captured ambient sound sample is determined to be at least in part comprising predetermined sound patterns of non-repetitive or transient machinery noise.

In an embodiment, the electronic data processor is further arranged to emit an alarm if the captured ambient sound sample is determined comprises predetermined sound patterns of repetitive machinery noise.

In an embodiment, the electronic data processor is further arranged to capture microphone signal during periodic temporal windows and arranged to enter a power save mode outside these windows.

According to the invention, the device is arranged to power down microphone circuitry when in power save mode.

According to the invention, the electronic data processor comprises a performance core configured to carry out sound processing tasks and a low-power core configured to carry out smoke detection tasks.

In an embodiment not part of the present invention, the electronic data processor comprises a data processor core configured to switch between two different operating modes comprising a run mode configured to carry out sound processing tasks and an ultra-low power mode configured to carry out smoke detection tasks.

It is also disclosed a computer-based method for providing a predictive maintenance alert according to independent claim 6.

In an embodiment, the electronic data processor is further arranged to determine a predictive maintenance alert if the captured ambient sound sample is determined to be at least in part comprising predetermined sound patterns of repetitive machinery noise.

In an embodiment, the electronic data processor is further arranged to determine a predictive maintenance alert if the captured ambient sound sample is determined to be at least in part comprising predetermined sound patterns of non-repetitive or transient machinery noise.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a compressing machine learning model.
**Figure 2****:** Schematic representation of an embodiment of a Tiny machine learning process.
**Figure 3**: Schematic representation of an embodiment of a present disclosure.

### DETAILED DESCRIPTION

The present disclosure relates to a smoke detector comprising a microphone and an electronic data processor arranged to detect the need of a predictive maintenance.

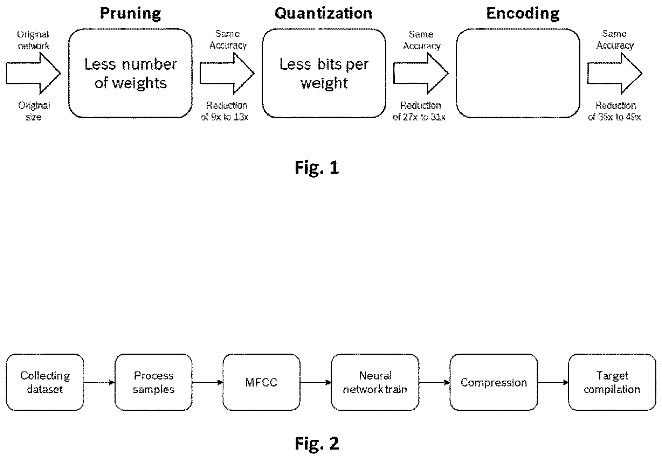

**Figure 1** shows a schematic representation of the approach for compressing the machine learning model. Since the machine learning model starts to be defined and trained using powerful computers, once the model reaches the desired performance it needs to be compressed. This is an important process to make possible to execute the machine learning algorithms from highly resource-constrained devices such as smoke detectors.

The iterative process of collecting, analysing, train and compression the machine learning model is shown in the **Figure 2****.** This is an iterative process that maybe repeated until desired performance is achieved from the machine learning model.

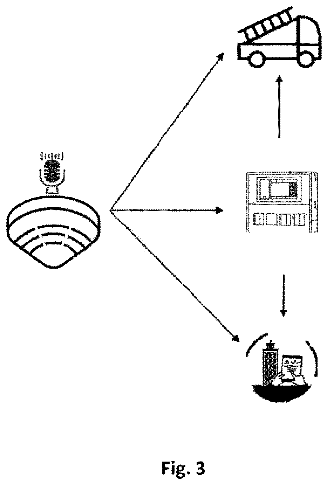

When applying the machine learning models into edge devices like smoke detectors additional services can be offered to the business customer/operator. As an example of that, in the context of the smoke detector, **Figure 3** shows a schematic representation of how different kinds of remote services can be offered either for the building owner and building operator. The smoke detector continues to operate as is, but it can be configured to add additional value thought machine learning models recognizing acoustic patents to enhance the building maintenance.

The term "comprising" whenever used in this document is intended to indicate the presence of stated features, integers, steps, components, but not to preclude the presence or addition of one or more other features, integers, steps, components, or groups thereof.

The disclosure should not be seen in any way restricted to the embodiments described and a person with ordinary skill in the art will foresee many possibilities to modifications thereof. The above-described embodiments are combinable. The following claims further set out particular embodiments of the disclosure.

## Claims

1. A smoke detector device comprising a microphone and an electronic data processor arranged to:
capture a microphone signal for sampling an ambient sound sample over a period of time;
process the captured ambient sound sample with a pretrained machine-learning model to determine whether the captured ambient sound sample matches predetermined sound patterns of machinery noise;
wherein the electronic data processor comprises a performance core configured to carry out sound processing tasks and a low-power core configured to carry out smoke detection tasks, wherein the device is arranged to power down microphone circuitry when in a power save mode.

2. The smoke detector device according to claim 1, wherein the electronic data processor is further arranged to determine a predictive maintenance alert if the captured ambient sound sample is determined to be at least in part comprising predetermined sound patterns of repetitive machinery noise.

3. The smoke detector device according to claim 1 or 2, wherein the electronic data processor is further arranged to determine a predictive maintenance alert if the captured ambient sound sample is determined to be at least in part comprising predetermined sound patterns of non-repetitive or transient machinery noise.

4. The smoke detector device according to any of the previous claims, wherein the electronic data processor is further arranged to emit an alarm if the captured ambient sound sample is determined comprises predetermined sound patterns of repetitive machinery noise.

5. The smoke detector device according to any of the previous claims, wherein the electronic data processor is further arranged to capture microphone signal during periodic temporal windows and arranged to enter the power save mode outside these windows.

6. Computer-based method for providing a predictive maintenance alert, using a smoke detector device comprising a microphone and an electronic data processor arranged to capture a microphone signal for sampling an ambient sound sample over a period of time;
process the captured ambient sound sample with a pretrained machine-learning model to determine whether the captured ambient sound sample matches predetermined sound patterns of machinery noise;
wherein the electronic data processor carrying out sound processing tasks in a performance core and carrying out smoke detection tasks in a low-power core, further powering down microphone circuitry when in a power save mode.

7. Method according to the previous claim, wherein the electronic data processor is further arranged to determine a predictive maintenance alert if the captured ambient sound sample is determined to be at least in part comprising predetermined sound patterns of repetitive machinery noise.

8. Method according to any of the claims 6-7, wherein the electronic data processor is further arranged to determine a predictive maintenance alert if the captured ambient sound sample is determined to be at least in part comprising predetermined sound patterns of non-repetitive or transient machinery noise.

## Patentansprüche

1. Rauchdetektorvorrichtung, die ein Mikrofon und einen elektronischen Datenprozessor umfasst, eingerichtet zum:
Erfassen eines Mikrofonsignals zum Abtasten einer Umgebungsgeräuschprobe über einen Zeitraum;
Verarbeiten der erfassten Umgebungsgeräuschprobe mit einem vortrainierten Maschinenlernmodell, um zu bestimmen, ob die erfasste Umgebungsgeräuschprobe mit vorbestimmten Schallmustern von Maschinengeräuschen übereinstimmt;
wobei der elektronische Datenprozessor einen Performancekern, der dazu ausgelegt ist, Geräuschverarbeitungsaufgaben auszuführen, und einen Niedrigleistungskern, der dazu ausgelegt ist, Rauchdetektionsaufgaben auszuführen, umfasst, wobei die Vorrichtung dazu eingerichtet ist, eine Mikrofonschaltungsanordnung herunterzufahren, wenn sie sich in einem Energiesparmodus befindet.

2. Rauchdetektorvorrichtung nach Anspruch 1, wobei der elektronische Datenprozessor ferner dazu eingerichtet ist, einen prädiktiven Wartungsalarm zu bestimmen, wenn bestimmt wird, dass die erfasste Umgebungsgeräuschprobe zumindest teilweise vorbestimmte Schallmuster von sich wiederholenden Maschinengeräuschen umfasst.

3. Rauchdetektorvorrichtung nach Anspruch 1 oder 2, wobei der elektronische Datenprozessor ferner dazu eingerichtet ist, einen prädiktiven Wartungsalarm zu bestimmen, wenn bestimmt wird, dass die erfasste Umgebungsgeräuschprobe zumindest teilweise vorbestimmte Schallmuster von sich nicht wiederholenden oder transienten Maschinengeräuschen umfasst.

4. Rauchdetektorvorrichtung nach einem der vorhergehenden Ansprüche, wobei der elektronische Datenprozessor ferner dazu eingerichtet ist, einen Alarm zu emittieren, wenn bestimmt wird, dass die erfasste Umgebungsgeräuschprobe vorbestimmte Schallmuster von sich wiederholenden Maschinengeräuschen umfasst.

5. Rauchdetektorvorrichtung nach einem der vorhergehenden Ansprüche, wobei der elektronische Datenprozessor ferner dazu eingerichtet ist, ein Mikrofonsignal während periodischer zeitlicher Fenster zu erfassen, und dazu eingerichtet ist, außerhalb dieser Fenster in den Energiesparmodus einzutreten.

6. Computerbasiertes Verfahren zum Bereitstellen eines prädiktiven Wartungsalarms unter Verwendung einer Rauchdetektorvorrichtung, die ein Mikrofon und einen elektronischen Datenprozessor umfasst, die eingerichtet ist zum Erfassen eines Mikrofonsignals zum Abtasten einer Umgebungsgeräuschprobe über einen Zeitraum;
Verarbeiten der erfassten Umgebungsgeräuschprobe mit einem vortrainierten Maschinenlernmodell, um zu bestimmen, ob die erfasste Umgebungsgeräuschprobe mit vorbestimmten Schallmustern von Maschinengeräuschen übereinstimmt;
wobei der elektronische Datenprozessor Geräuschverarbeitungsaufgaben in einem Performancekern durchführt und Rauchdetektionsaufgaben in einem Niedrigleistungskern durchführt, wobei ferner eine Mikrofonschaltungsanordnung heruntergefahren wird, wenn sie sich in einem Energiesparmodus befindet.

7. Verfahren nach dem vorhergehenden Anspruch, wobei der elektronische Datenprozessor ferner dazu eingerichtet ist, einen prädiktiven Wartungsalarm zu bestimmen, wenn bestimmt wird, dass die erfasste Umgebungsgeräuschprobe zumindest teilweise vorbestimmte Schallmuster von sich wiederholenden Maschinengeräuschen umfasst.

8. Verfahren nach einem der Ansprüche 6-7, wobei der elektronische Datenprozessor ferner dazu eingerichtet ist, einen prädiktiven Wartungsalarm zu bestimmen, wenn bestimmt wird, dass die erfasste Umgebungsgeräuschprobe zumindest teilweise vorbestimmte Schallmuster von sich nicht wiederholenden oder transienten Maschinengeräuschen umfasst.

## Revendications

1. Dispositif détecteur de fumée comprenant un microphone et un processeur électronique de données agencé pour :
capter un signal de microphone pour échantillonner un échantillon sonore ambiant sur une période de temps ;
traiter l'échantillon sonore ambiant capturé avec un modèle d'apprentissage automatique préformé afin de déterminer si l'échantillon sonore ambiant capturé correspond à des modèles sonores prédéterminés de bruit de machine ; où le processeur de données électronique comprend un cœur hautes performances configuré pour exécuter des tâches de traitement du son et un cœur basse consommation configuré pour exécuter des tâches de détection de fumée, le dispositif étant agencé pour mettre hors tension les circuits de microphone lorsqu'il est en mode d'économie d'énergie.

2. Dispositif détecteur de fumée selon la revendication 1, dans lequel le processeur de données électronique est en outre agencé pour déterminer une alerte de maintenance prédictive si l'échantillon sonore ambiant capturé est déterminé comme comprenant au moins en partie des motifs sonores prédéterminés de bruit répétitif de machine.

3. Dispositif détecteur de fumée selon la revendication 1 ou la revendication 2, dans lequel le processeur de données électronique est en outre agencé pour déterminer une alerte de maintenance prédictive si l'échantillon sonore ambiant capturé est déterminé comme comprenant au moins en partie des motifs sonores prédéterminés de bruit non répétitif ou transitoire de machine.

4. Dispositif détecteur de fumée selon l'une quelconque des revendications précédentes, dans lequel le processeur de données électronique est en outre agencé pour émettre une alarme si l'échantillon sonore ambiant capturé est déterminé comme comprenant des motifs sonores prédéterminés de bruit répétitif de machine.

5. Dispositif détecteur de fumée selon l'une quelconque des revendications précédentes, dans lequel le processeur de données électronique est en outre agencé pour capturer un signal de microphone pendant des fenêtres temporelles périodiques et agencé pour entrer dans le mode d'économie d'énergie en dehors de ces fenêtres.

6. Procédé informatisé pour fournir une alerte de maintenance prédictive, au moyen d'un dispositif détecteur de fumée comprenant un microphone et un processeur de données électroniques agencé pour capturer un signal de microphone afin d'échantillonner un échantillon de son ambiant sur une période de temps ;
traiter l'échantillon sonore ambiant capturé avec un modèle d'apprentissage automatique préformé afin de déterminer si l'échantillon sonore ambiant capturé correspond à des modèles sonores prédéterminés de bruit de machine ;
où le processeur de données électronique exécute des tâches de traitement du son dans un cœur hautes performances et exécute des tâches de détection de fumée dans un cœur basse consommation, et mettant en outre hors tension les circuits de microphone lorsqu'il est en mode d'économie d'énergie.

7. Procédé selon la revendication précédente, dans lequel le processeur de données électronique est en outre agencé pour déterminer une alerte de maintenance prédictive si l'échantillon sonore ambiant capturé est déterminé comme comprenant au moins en partie des motifs sonores prédéterminés de bruit répétitif de machine.

8. Procédé selon l'une quelconque des revendications 6 et 7, dans lequel le processeur de données électronique est en outre agencé pour déterminer une alerte de maintenance prédictive si l'échantillon sonore ambiant capturé est déterminé comme comprenant au moins en partie des motifs sonores prédéterminés de bruit non répétitif ou transitoire de machine.
